## Europäisches Patentamt

## European Patent Office

## Office européen des brevets

(11) Veröffentlichungsnummer: **0 107 644**

**B1**

(12) # EUROPÄISCHE PATENTSCHRIFT

(45) Veröffentlichungstag der Patentschrift:
23.07.86

(51) Int. Cl.⁴: **G 01 B 5/08,** G 01 B 7/12

(21) Anmeldenummer: **83890181.7**

(22) Anmeldetag: **14.10.83**

(54) Vorrichtung zum Messen bzw. Überwachen der Durchmesser stabförmiger Werkstücke.

(30) Priorität: **15.10.82 AT 3793/82**

(43) Veröffentlichungstag der Anmeldung:
**02.05.84 Patentblatt 84/18**

(45) Bekanntmachung des Hinweises auf die Patenterteilung:
**23.07.86 Patentblatt 86/30**

(84) Benannte Vertragsstaaten:
**DE FR GB IT SE**

(56) Entgegenhaltungen:
**DE-A-1 931 669**
**DE-A-2 148 066**

(73) Patentinhaber: **Steyr- Daimler- Puch Aktiengesellschaft, Kärntnerring 7, A-1010 Wien (AT)**

(72) Erfinder: **Lenz, Wolfgang, Almrauschweg 2, A-4400 Steyr (AT)**

LIBER, STOCKHOLM 1986

## Beschreibung

Die Erfindung bezieht sich auf eine Vorrichtung zum Messen bzw. Überwachen der Durchmesser stabförmiger Werkstücke mit einer Werkstückdreheinrichtung und wenigstens einem Paar einander gegenüberliegender, gemeinsam gemeinsam an das Werkstück andrückbarer und zurückzeichbarer Meßtaster, die mit einer elektronischen Auswerteinrichtung verbunden sind (siehe auch DE-A-2 148 066).

Derartige Vorrichtungen sind, beispielsweise für das Messen der Durckmesser von Spiralbohrern, bereits bekannt. Dabei werden die von einer entsprechenden Werkzeugmaschine hergestellten Werkstücke stichprobenweise von Hand in eine Spannvorrichtung eingebracht und in Drehung versetzt. Anschließend werden Meßtaster an das Werkstück angedrückt. Die Meßtaster übermitteln die festgestellten Meßwerte einer elektronischen Anzeigeeinrichtung, die dem Bedienungspersonal jene Informationen zur Verfügung stellt, die für eine allenfalls erforderliche Nachstellung der Werkzeugmaschine zur Erzielung der vorgeschriebenen, innerhalb eines bestimmten Toleranzbereiches liegenden Meßwerte notwendig sind. Beim Messen von Spiralbohrern werden beispielsweise jeweils drei Meßwerte ermittelt, nämlich der Schaftdurchmesser und die beiden Durchmesser an den Enden des konischen Schneidenteiles zur Bestimmung der Konizität. Wird eine Abweichung dieser Konizität vom Sollmaß festgestellt, so muß eine Auswechslung bzw. ein Abziehen der Schleifscheibe mit nachfolgendem neuerlichem Einstellen der Schleifscheibe veranlaßt werden. Die Handhabung einer solchen Meßvorrichtung und die entsprechenden Nachstellarbeiten an der Werkzeugmaschine erfordern einen erheblichen Zeitaufwand und geschultes Personal. In nachteiliger Weise können daher nur relativ wenig Stichproben aus der laufenden Fertigung entnommen und nachgemessen werden, was insgesamt den unvermeidlichen Ausschuß erhöht.

Der Erfindung liegt demnach die Aufgabe zugrunde, diesen Mangel zu beseitigen und eine Vorrichtung der eingangs geschilderten Art zu schaffen, die eine raschere, von der Aufmerksamkeit und Sorgfalt des Bedienungspersonals unabhängige Werkstückmessung gewährleistet.

Die Erfindung löst die gestellte Aufgabe dadurch, daß die Dreheinrichtung für das über eine geneigte Rinne herangeführte, an einem Axialanschlag vorzugsweise unter Schwerkraft zur Anlage kornmende Werkstück aus zwei angetriebenen, ineinandergreifenden Kammwalzen besteht und eine radial gegen das Werkstück spannbare und von diesem abhebbare Andrückrolle vorgesehen ist, wobei die Meßtaster durch Federkraft und/oder ein Druckmittel gemeinsam an das Werkstück anstellbar bzw. von diesem zurückziehbar sind und eine Werkstückabführeinrichtung angeordnet ist.

Eine solche Vorrichtung erfordert keinen laufenden Eingriff des Bedienungspersonales, vielmehr können die Werkstücke ohne Zeitverlust für Einspannarbeiten u.dgl. in rascher unmittelbarer Aufeinanderfolge geprüft werden. Die eintreffenden Werkstücke gelangen entweder unter Schwerkraftwirkung oder auf Grund ihnen erteilter kinetischer Energie aus der geneigten Rinne auf die angetriebenen Kammwalzen, bis sie an dem Axialanschlag zur Anlage kommen. Gesteuert durch übliche Fühler wird unmittelbar darauf die Andrückrolle gegen das Werkstück gespannt, und die Meßtaster werden an dieses angestellt. Kurz danach können die Meßtaster wieder zurückgezogen werden, worauf das Werkstück abgeführt wird, so daß die Vorrichtung sofort wieder für die nächste Messung zur Verfügung steht. Es können daher wesentlich mehr Werkstücke als bisher, gegebenenfalls auch alle anfallenden Werkstücke, geprüft werden, und etwaige Unzulänglichkeiten bzw. Irrtümer seitens des Bedienungspersonals sind ausgeschlossen. Die Anordnung der ineinandergreifenden angetriebenen Kammwalzen gibt dabei die Voraussetzung, das Werkstück bei der Messung um seine Achse zu drehen, ohne es in einer eigenen Einrichtung einspannen zu müssen.

Um Werkstücke mit unterschiedlicher Dicke in derselben Vorrichtung messen zu können, ist erfindungsgemäß wenigstens eine der Kammwalzen um eine zur ihr parallele Achse schwenkbar gelagert. Je nach der Schwenkstellung ergibt sich dann ein verschieden weiter Walzenspalt, so daß Werkstücke, deren Durchmesser stark unterschiedlich sind, im Walzenspalt gelagert werden können, ohne daß die Lage der Werkstückachse in bezug auf die Walzenachsen eine wesentliche Änderung erfährt.

In weiterer Ausbildung der Erfindung ist der Axialanschlag quer zu den Walzenachsen aus der Werkstückbahn wegbewegbar. Das Werkstück kann also nach der Messung in Längsrichtung weitergefördert werden, so daß sich eine einfache Konstruktion für die Werkstückabführeinrichtung ergibt.

Dabei ist es besonders zweckmäßig, wenn die Werkstückabführeinrichtung aus wenigstens zwei zu den Kammwalzen gleichgerichteten, quer zur diesen verschiebbaren Rohren besteht und das Maß der Verschiebung in Abhängigkeit vom Meßergebnis steuerbar ist. Auf diese Weise ist es möglich, die Werkstücke je nach dem Meßergebnis in das eine oder andere Rohr zu leiten und dadurch gleich eine Sortierung vorzunehmen.

Eine weitere Konstruktionsvereinfachung läßt sich dadurch erzielen, daß der Axialanschlag und die Rohre auf einem gemeinsamen Schlitten angeordnet sind. Das Wegbewegen des Axialanschlages aus der Werkstückbahn hat dann automatisch das Einführen des einen oder anderen Rohres in diese Bahn zur Folge, so daß für den Axialanschlag und die Abführeinrichtung auch mit einer einfachen Steuereinrichtung das Auslangen gefunden wird.

Um die Andrückrolle mit einfachen Mitteln gegen das Werkstück drücken bzw. von diesem abheben zu können, ist sie in einem vorzugsweise durch ein Druckmittel quer zu den Walzenachsen verschwenkbaren Arm gelagert. Zur Bewegung des die Andrückrolle tragenden Armes dient also vorzugsweise ein Kolbenantrieb, der auf Grund von Meßfühlerimpulsen nach dem jeweiligen Auftreffen des Werkstückes am Axialanschlag bzw. nach vollzogener Messung beaufschlagt wird.

Erfindungsgemäß schließt die Achse der Andrückrolle mit den Walzenachsen einen spitzen Winkel ein. Dadurch ergibt sich eine gegen den Axialanschlag gerichtete Kraftkomponente, die ein sicheres Anliegen des Werkstückes am Axialanschlag zur Folge hat. Der Winkel zwischen den Achsen der Andrückrolle und der Walzen ist selbstverständlich gering, um die Werkstückdrehung nicht zu beeinträchtigen.

Zum Heranführen des Werkstückes an die Kammwalzen kann eine gabelförmige Laderinne mit einem zu den Kammwalzen gerichteten Gabelende und einem an eine Umgehungsrinne anschließenden Gabelende vorgesehen sein, wobei jeweils eines der beiden Gabelenden weichenartig durch eine schwenkbare Zunge verschließbar ist. Es ist daher möglich, in beliebiger Folge mehr oder weniger Werkstücke aus dem anfallenden Werkstückfluß zu entnehmen, da je nach der Stellung der Zunge die Werkstücke entweder zu den Kammwalzen und damit zur Messung gelangen oder durch die Umgehungsrinne abgeleitet werden.

Bei einem Werkstück mit zylindrischem Schaft und konischem Schneidenteil, also insbesondere bei Spiralbohrern, Reibahlen und Schaftfräsern, sind die Kammwalzen und die Andrückrolle lediglich für den zylindrischen Schaft bemessen und bestimmt. Dadurch wird das betreffende Werkstück bei der Drehung exakt zentrisch geführt, wodurch die richtige Lage der Meßtaster in bezug auf die Werkstückachse stets gewährleistet ist.

Die Erfindung besteht auch in der Verwendung der geschilderten Vorrichtung zur elektrischen Steuerung der laufenden Korrektur der Einstellung einer Werkzeugmaschine zur Herstellung der gemessenen bzw. überwachten Werkstücke. Diese besondere Verwendung ist möglich, weil die erfindungsgemäße Vorrichtung erstmals ein rasches automatisches Messen der anfallenden Werkstücke gestattet und die Meßtaster elektrische Signale liefern, die in der dann als Steuereinrichtung ausgebildeten Auswerteinrichtung elektrische Impulse zur meßwertabhängigen Veränderung der Einstellung der Werkzeugmaschine ergeben.

In der Zeichnung ist der Erfindungsgegenstand in einem Ausführungsbeispiel dargestellt, und zwar zeigen in unterschiedlichen Maßstäben

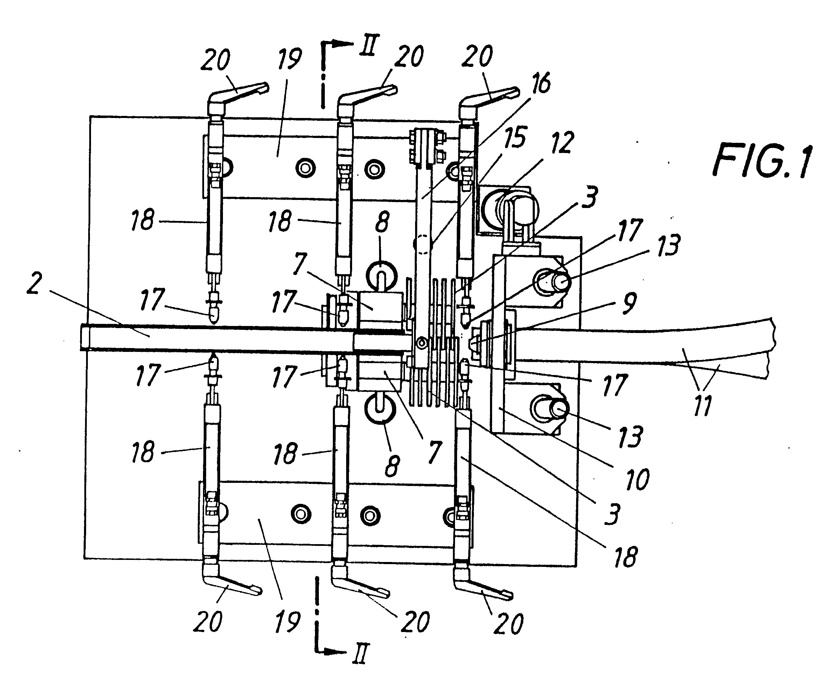

Fig. 1 die wesentlichen Teile einer Vorrichtung zum Messen bzw. Überwachen der Durchmesser von Spiralbohrern in Draufsicht,

Fig. 2 im Querschnitt nach der Linie II-II der Fig. 1 und

Fig. 3 in Seitenansicht, wobei die Meßtaster und ihre Halterungen der besseren Übersicht wegen nicht dargestellt sind.

Die erfindungsgemäße Vorrichtung ist einer Werkzeugmaschine zur Herstellung von Spiralbohrern nachgeordnet.

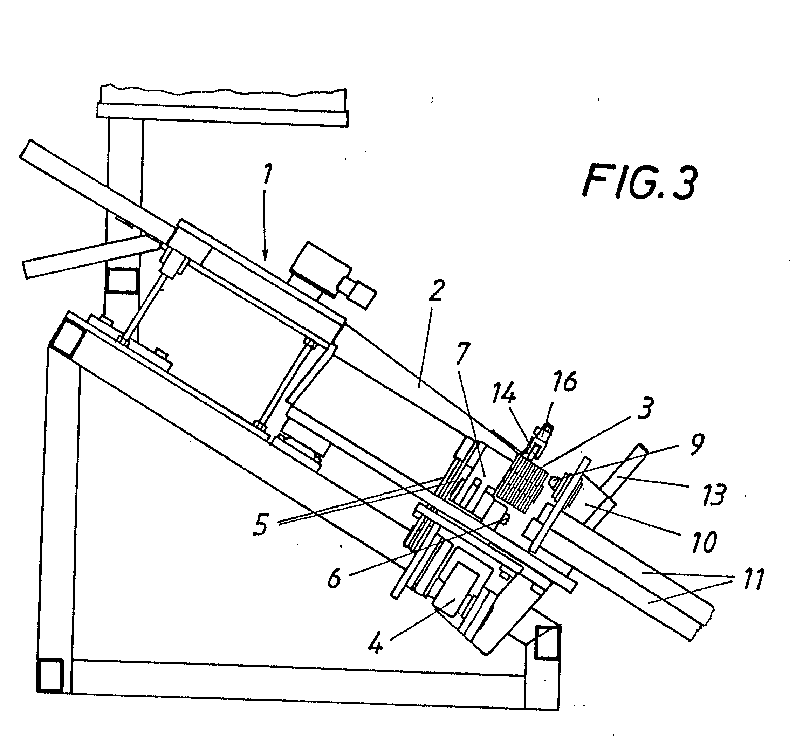

Die von der Werkzeugmaschine ausgestoßenen Werkstücke gelangen zunächst in eine Vorsortiereinrichtung 1 (Fig. 3), wo sie mit Hilfe einer schwenkbaren Weiche entweder in eine Umgehungsrinne oder in eine der Vorrichtung zugehörige geneigte Rinne 2 geleitet werden. An die geneigte Rinne 2 schließt eine Dreheinrichtung an, die aus zwei ineinandergreifenden Kammwalzen 3 besteht. Die Kammwalzen 3 werden von einem Motor 4 über ein Getriebe und Riemen 5 angetrieben. Beide Kammwalzen 3 können um eine zu ihnen parallele Achse 8 verschwenkt werden, wobei sich die die Kammwalzen 3 tragenden Schwenkarme 7 über Ausleger an Stellschrauben 8 abstützen.

Das über die geneigte Rinne 2 zugeführte Werkstück kommt jeweils an einem Axialanschlag 9 zur Anlage, der an einem Schlitten 10 angeordnet ist, in dem sich auch eine Werkstückabführeinrichtung in Form von zwei zu den Kammwalzen 3 gleichgerichteten Rohren 11 befindet. Der Schlitten 10 kann mit Hilfe eines Kolbenantriebes 12 auf Führungsrohren 13 quer zu den Kammwalzen 3 verschoben werden.

Für das Werkstück ist im Bereich der Kammwalzen 3 eine Andrückrolle 14 vorgesehen, die in einem mittels eines Kolbenantriebes 15 quer zu den Kammwalzen 3 verschwenkbaren Arm 16 gelagert ist.

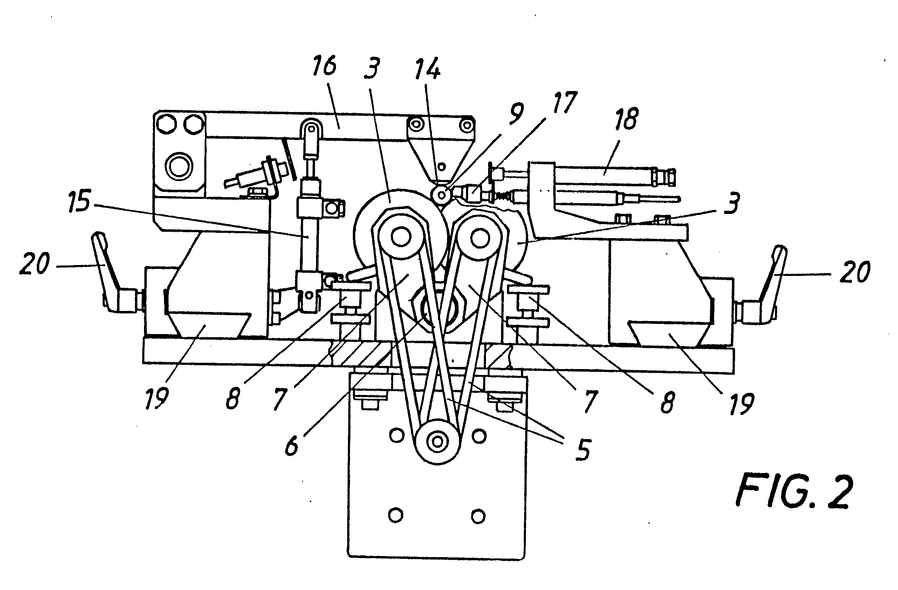

Schließlich sind zur Durchmessermessung des auf den Kammwalzen 3 liegenden, durch die Andrückrolle 14 gehaltenen und durch den Anschlag 9 axial festgelegten Werkstückes drei Paare von einander diametral gegenüberliegenden Meßtastern 17 vorgesehen (in Fig. 2 auf der linken Seite weggelassen, in Fig. 3 überhaupt fehlend), die federnd gegen das Werkstück gedrückt und mit Hilfe von Kolbenantrieben 18 von diesem zurückgezogen werden. Die Meßtaster 17 sind auf Führungen 19 verschiebbar und mit Hilfe von Klemmhebeln 20 in der jeweils gewünschten Stellung fixierbar.

Sobald das Werkstück den Axialanschlag 9 erreicht hat, wird die Andrückrolle 14 angestellt und das Werkstück in Drehung versetzt. Dann erfolgt die Messung mit Hilfe der Meßtaster 17, was selbstverständlich nur ganz kurze Zeit beansprucht. Hierauf werden die Meßtaster 17 vom Werkstück zurückgezogen, es wird der Arm 16 mit der Andrückrolle 14 hochgeschwenkt und der Schlitten 10 verschoben, so daß eines der Rohre 11 in die Bahn des Werkstückes gelangt und dieses durch das betreffende Rohr abgeführt wird, wonach durch entsprechende Schlittenverschiebung der Anschlag 9 wieder seine ursprüngliche Stellung einnimmt und das nächste Werkstück unter Wiederholung der geschilderten Vorgänge gemessen werden kann. Die Meßtaster 17 können gleich mit einer elektronischen Steuereinrichtung zur meßwertabhängigen Korrektur der Einstellung der der Vorrichtung vorgeordneten Werkzeugmaschine verbunden sein.

**Patentansprüche**

1. Vorrichtung zum Messen bzw. Überwachen der Durchmesser stabförmiger Werkstücke mit einer Werkstückdreheinrichtung und wenigstens einem Paar einander gegenüberliegender, gemeinsam an das Werkstück andrückbarer und zurückziehbarer Meßtaster (17), die mit einer elektronischen Auswerteinrichtung verbunden sind, dadurch gekennzeichnet, daß die Dreheinrichtung für das über eine geneigte Rinne (2) herangeführte, an einem Axialanschlag (9) vorzugsweise unter Schwerkraft zur Anlage kommende Werkstück aus zwei angetriebenen, ineinandergreifenden Kammwalzen (3) besteht und eine radial gegen das Werkstück spannbare und von diesem abhebbare Andrückrolle (14) vorgesehen ist, wobei die Meßtaster (17) durch Federkraft und/oder ein Druckmittel gemeinsam an das Werkstück anstellbar bzw. von diesem zurückziehbar sind und eine Werkstückabführeinrichtung (10 - 13) angeordnet ist.

2. Vorrichtung nach Anspruch 1, dadurch gekennzeichnet, daß wenigstens eine der Kammwalzen (3) um eine zu ihr parallele Achse (6) schwenkbar gelagert ist.

3. Vorrichtung nach Anspruch 1 oder 2, dadurch gekennzeichnet, daß der Axialanschlag (9) quer zu den Walzenachsen aus der Werkstückbahn wegbewegbar ist.

4. Vorrichtung nach einem der Ansprüche 1 bis 3, dadurch gekennzeichnet, daß die Werkstückabführeinrichtung (10 - 13) aus wenigstens zwei zu den Kammwalzen (3) gleichgerichteten, quer zu diesen verschiebbaren Rohren (11) besteht und das Maß der Verschiebung in Abhängigkeit vom Meßergebnis steuerbar ist.

5. Vorrichtung nach den Ansprüchen 3 und 4, dadurch gekennzeichnet, daß der Axialanschlag (9) und die Rohre (11) auf einem gemeinsamen Schlitten (10) angeordnet sind.

6. Vorrichtung nach einem oder mehreren der Ansprüche 1 bis 5, dadurch gekennzeichnet, daß die Andrückrolle (14) in einem vorzugsweise durch ein Druckmittel quer zu den Walzenachsen verschwenkbaren Arm (16) gelagert ist.

7. Vorrichtung nach einem oder mehreren der Ansprüche 1 bis 6, dadurch gekennzeichnet, daß die Achse der Andrückrolle (14) mit den Walzenachsen einen spitzen Winkel einschließt.

8. Vorrichtung nach einem oder mehreren der Ansprüche 1 bis 7, dadurch gekennzeichnet, daß zum Heranführen des Werkstückes an die Kammwalzen (3) eine gabelförmige Laderinne mit einem zu den Kammwalzen (3) gerichteten Gabelende und einem an eine Umgehungsrinne anschließenden Gabelende vorgesehen ist, wobei jeweils eines der beiden Gabelenden weichenartig durch eine schwenkbare Zunge verschließbar ist.

9. Vorrichtung nach einem oder mehreren der Ansprüche 1 bis 6, dadurch gekennzeichnet, daß bei einem Werkstück mit zylindrischem Schaft und konischem Schneidenteil die Kammwalzen (3) und die Andrückrolle (14) lediglich für den zylindrischen Schaft bemessen und bestimmt sind.

10. Verwendung einer Vorrichtung nach einem oder mehreren der Ansprüche 1 bis 9 zur elektronischen Steuerung der laufenden Korrektur der Einstellung einer Warkzeugmaschine zur Herstellung der gemessenen bzw. überwachten Werkstücke.

**Claims**

1. A device for measuring or checking the diameters of bar-shaped work pieces, having a work piece rotation device and at least one pair of measuring scanners arranged opposite each another, together pressable onto the work piece and withdrawable, which are connected to an electronic evaluation device, characterised in that the rotation device for the work piece - which is advanced across an inclined chute (2) and which comes to rest against an axial stop (9), preferably under the force of gravity - comprises two driven, intercalated grooved rollers (3), and a pressure roller (14) is provided, which may be radially urged against the work piece and retracted therefrom, it being possible, by spring force and/or a pressure means, to position the measuring scanners (17) simultaneously on the work piece or to retract them therefrom, and there is arranged a work piece outlet device (10 to 13).

2. A device according to claim 1, characterised in that at least one of the grooved rollers (3) is pivotably mounted about an axis (6) which is parallel to it.

3. A device according to claim 1 or 2, characterised in that the axial stop (9) is movable transversely to the axes of the grooved rollers out of the path of the work piece.

4. A device according to any one of claims 1 to 3, characterised in that the work piece outlet device (10 to 13) comprises at least two pipes (11) arranged in the same direction as the grooved rollers (3) and displacable transversely thereto, and the extent of the displacement is controllable as a function of the measurement result.

5. A device according to claims 3 and 4, characterised in that the axial stop (9) and the pipes (11) are arranged an a common sliding carriage (10).

6. A device according to one or more of claims 1 to 5, characterised in that the pressure roller (14) is mounted in an arm (16) which is pivotable, preferably by a pressure means, transversely to the axes of the grooved rollers.

7. A device according to one or more of claims 1 to 6, characterised in that the axis of the pressure roller (14) forms an acute angle with the axes of the grooved rollers.

8. A device according to one or more of claims 1 to 7, characterised in that, for advancing the work piece to the grooved rollers (3), there is provided a forked charging chute having one fork end pointing towards the grooved rollers (3) and one fork end adjoining a by-pass chute, it being possible to close one of the two fork ends in each case in the manner of a switch by means of a pivotable tongue.

9. A device according to one or more of claims 1 to 8, characterised in that, in the case of a work piece having a cylindrical shaft and a conical cutting part, the grooved rollers (3) and the pressure roller (14) are proportioned and intended for the cylindrical shaft alone.

10. Use of a device according to one or more of claims 1 to 9 for electronically controlling the continuous correction of the setting of a machine tool for producing the measured or checked work pieces.

## Revendications

1. Dispositif pour la mesure et le contrôle du diamètre de pièces analogues à des barres comprenant un dipositif d'entraînement en rotation des pièces et au moins une paire de palpeurs de mesure (17) opposés l'un à l'autre, pouvant être appliqués ensemble contre la pièce et en être éloignés, qui sont reliés à un dispositif de lecture électronique, caractérisé en ce que le dispositif d'entraînement en rotation de la pièce qui arrive dirigée par une goulotte (2) inclinée, venant s'appliquer contre une butée axiale (9), avantageusement sous l'effet de son poids, est constitué par deux roues à peigne (3) entraînées s'engageant l'une dans l'autre, et il est prévu un galet presseur (14) pouvant être appliqué en sens radial contre la pièce et en être éloigné, cependant que les palpeurs de mesure (17) peuvent être appliqués ensemble contre la pièce et en être éloignés, au moyen d'un ressort et/ou d'un moyen de pression, et qu'un dispositif d'évacuation de pièces (10 - 13) est prévu.

2. Dispositif selon la revendication 1, caractérisé en ce que l'une au moins des roues à peigne (3) est montée pivotante autour d'un axe (6) qui lui est parallèle.

3. Dispositif selon la revendication 1 ou 2, caractérisé en ce que la butée axiale (9) est déplaçable en dehors du trajet des pièces en sens transversal aux axes des roues.

4. Dispositif selon l'une quelconque des revendications 1 à 3, caractérisé en ce que le dispositif d'évacuation des pièces (10 - 13) est constitué par au moins deux tubes (11) dirigés dans le même sens vers les roues à peigne (3) et déplaçables en translation transversalement à elles, et que la grandeur du déplacement est déterminée en fonction du résultat de la mesure.

5. Dispositif selon les revendications 3 et 4, caractérisé en ce que la butée axiale (9) et les tubes (11) sont disposés sur un chariot (10) commun.

6. Dispositif selon l'une ou plusieurs des revendications 1 à 5, caractérisé en ce que le galet presseur (14) est monté sur un bras (16) pivotant, de préférence sous l'action d'un moyen de pression, transversalement aux axes des roues.

7. Dispositif selon l'une ou plusieurs des revendications 1 à 6, caractérisé en ce que l'axe du galet presseur (14) fait un angle aigu avec les axes des roues.

8. Dispositif selon l'une ou plusieurs des revendications 1 à 7, caractérisé en ce qu'il est prévu pour diriger la pièce jusqu'aux roues à peigne (3) une goulotte de chargement en fourche avec une extrémité de fourche dirigée vers les roues à peigne (3) et l'autre extrémité de fourche raccordée à une goulotte d'évitement, l'une des deux extrémités de fourche pouvant être obturée par une lame pivotante à la manière d'un aiguillage.

9. Dispositif selon l'une ou plusieurs des revendications 1 à 8, caractérisé en ce que, pour une pièce à tige cylindrique et à taillant conique, les roues à peigne (3) et le galet presseur (14) sont dimensionnés et prévus uniquement pour la tige cylindrique.

10. Utilisation d'un dispositif suivant l'une ou plusieurs des revendications 1 à 9 pour la commande électronique de la correction en continu du réglage d'une machine outil servant à la fabrication de pièces mesurées ou contrôlées.

FIG.1

FIG. 2

FIG.3

0 107 644